# EUROPÄISCHE PATENTSCHRIFT

(11) **EP 3 994 790 B1**
(45) Veröffentlichungstag und Bekanntmachung des Hinweises auf die Patenterteilung: **10.09.2025**
(21) Anmeldenummer: 20737122.0
(22) Anmeldetag: 02.07.2020
(51) Int. Cl.: H02K 15/04

(54) **VERFAHREN ZUR HERSTELLUNG EINER SPULENWICKLUNG ZUM EINLEGEN IN RADIAL OFFENE NUTEN VON STATOREN ODER ROTOREN VON ELEKTROMASCHINEN**
METHOD FOR PRODUCING A COIL WINDING FOR INSERTION INTO RADIALLY OPEN SLOTS OF STATORS OR ROTORS OF ELECTRICAL MACHINES
PROCÉDÉ DE FABRICATION D'UN ENROULEMENT DE BOBINE À INSÉRER DANS DES RAINURES OUVERTES RADIALEMENT DE STATORS OU DE ROTORS DE MACHINES ÉLECTRIQUES

(30) Priorität: 03.07.2019 DE 102019117966
(43) Veröffentlichungstag der Anmeldung: 11.05.2022
(73) Patentinhaber: Schaeffler ELMOTEC STATOMAT GmbH, 61184 Karben (DE)
(72) Erfinder: WITWER, Keith A., Fort Wayne, Indiana 46804 (US)
(74) Vertreter: Boult Wade Tennant LLP
(86) Internationale Anmeldenummer: PCT/EP2020/068683
(87) Internationale Veröffentlichungsnummer: WO 2021/001483

(56) Entgegenhaltungen:
- DE-A1- 102015 120 661
- US-A1- 2006 032 040
- US-A1- 2017 047 830

## Beschreibung

Die Erfindung befasst sich mit einem Verfahren zur Herstellung einer Spulenwicklung zur Einlage in radial offene Nuten in einen Rotor oder Stator einer elektrischen Maschine, wobei die Spulenwicklung durch eine flache und um eine Drehachse drehbare Wickelschablone geformt wird.

Das Verfahren eignet sich insbesondere auch für das Verwenden von im Querschnitt im Wesentlichen rechteckförmigen Drähten, die im Hinblick auf einen optimalen Füllgrad in den Nuten des Stators bevorzugt werden. Herkömmliche Wickelverfahren für Runddraht sind für derartige Drahtquerschnitte nicht einsetzbar.

Das vorliegende Verfahren dient vor allem dazu, eine Spulenwicklung als sogenannte verteilte Wellenwicklung herzustellen, die dann in die Nuten eines Stators (oder Rotors) eingelegt werden kann. Eine solche Spulenwicklung oder verteilte Wellenwicklung wird auch als Stabwellenwicklung bezeichnet.

Eine verteilte Wellenwicklung weist eine Vielzahl paralleler Drähte auf, die gerade Abschnitte besitzen, die in den Nuten eines Stators angeordnet werden. Diese geraden Abschnitte alternieren zwischen einer inneren und einer benachbarten äußeren Radiallage in dem Stator, wenn sich das Drahtmuster radial um den Stator bewegt. Dieses verteilte Wellenmuster enthält eine Anzahl X an Phasen oder gruppierter Nuten in dem Stator. Im Allgemeinen ist X ein Vielfaches von 3, es sind aber auch Konstruktionen möglich, bei welchen X eine beliebige andere ganze Zahl ist. Gleichermaßen ist es auch möglich, eine Wellenwicklung ohne das Alternieren der geraden Abschnitte in Bezug auf benachbarte offene Nuten in einem Stator oder Rotor vorzusehen.

Das genaue Aussehen der zu erzeugenden Wicklung wird im Rahmen des Ausführungsbeispiels noch näher erörtert.

Aus DE 10 2015 120 661 A1 ist ein Verfahren zur Herstellung einer solchen Wicklung bekannt, das auf einer kontinuierlichen Wellenwicklung basiert. Hierbei wird eine Spulenwicklung zum Einlegen in radial offene Nuten von Statoren oder Rotoren elektrischer Maschinen hergestellt, wobei die Spulenwicklung aus einer Anzahl miteinander verflochtener Drähte besteht, die mehrfach gegenläufig umgebogen werden, so dass parallel zueinander liegende Schenkel der Drähte, die zum Ausfüllen der Nuten bestimmt sind, durch dachartige Wickelköpfe verbunden sind, die stirnseitig über die Rotoren oder Statoren überstehen. Hierbei kommt eine flache und drehbare Wickelschablone zum Einsatz. Die Spulenwicklung, die in den Stator eingesetzt wird, hat an beiden Enden der Wellenwicklung offene Enden, die durch Abschnitte der Drähte gebildet werden.

Statoren mit einer Wellenwicklung sind auch aus der US 2006/032040 A1 bekannt. Die US 2017/047830 A1 zeigt ein Verfahren zur Herstellung einer Wellenwicklung mittels eines Wickeldorns.

Insbesondere bei Anwendungen mit drei elektrischen Phasen müssen an einem Ende der Wellenwicklung bzw. der Spulenwicklung offene Drahtenden verbunden werden, wenn mehr als drei Drähte zu einer Wellenwicklung oder Spulenwicklung gewickelt werden. Diese Verbindung erfolgt durch speziell dafür vorgesehene Anschlussstücke oder durch permanentes stoffschlüssiges Verbinden der Drahtenden nach dem Einsetzen der Wellenwicklung oder der Spulenwicklung in den Stator oder Rotor oder nach der Fertigstellung der Spulenwicklung. In einem solchen Fall ist wird für eine derartige Verbindung mittels Anschlusstücken zusätzlicher Bauraum benötigt und/oder der elektrische Kontakt durch Übergangswiderstände und/oder Materialunterschiede beeinträchtigt. Zudem ist ein zusätzlicher Montageschritt bei der Bestückung des Stators oder des Rotors in Hinblick auf die elektrische Konfiguration der Spulenwicklung nötig.

Die Aufgabe der vorliegenden Erfindung besteht darin, ein Verfahren der eingangs genannten Art vorzusehen, das die Herstellung eines Stators oder eines Rotors mit einer Wellenwicklung oder Spulenwicklung erleichtert und einen zuverlässigen und platzsparenden Betrieb einer elektrischen Maschine mit einem solchen Stator oder Rotor zu ermöglichen.

Erfindungsgemäß wird die Aufgabe durch ein Verfahren der eingangs genannten Art gelöst, bei welchem die Spulenwicklung (70) ein Drahtpaket (60) aufweist, das aus einer Anzahl von Drähten (32) besteht, wobei die Drähte (32) des Drahtpakets (60) parallel zueinander verlaufen und an einem Ende des Drahtpakets (60) paarweise miteinander verbunden werden und die jeweils paarweise miteinander verbundenen Drähte einstückig aus einem jeweils durchgängigen Einzeldraht (32a,32b,32c,32d,32e,32f) gebildet und derart an einem Ende des Drahtpakets (60) umgebogen werden, dass die Form der Umbiegungen aller durchgängigen Einzeldrähte (32a,32b,32c,32d,32e,32f) der Form eines Wickelkopfs (42) entspricht, wobei weiterhin dieSpulenwicklung ein Drahtpaket aufweist, das aus einer Anzahl von Drähten besteht, wobei die Drähte des Drahtpakets parallel zueinander verlaufen und an einem Ende des Drahtpakets paarweise miteinander verbunden sind, mit den Verfahrensschritten:
a) Zufuhr des für die Spulenwicklung zum Einsatz kommenden Drahtpakets senkrecht zu der Wickelschablone;
b) Halten des Drahtpakets an einer Fixierstelle in einem ersten Haltebereich auf der Wickelschablone;
c) Halten des Drahtpakets an einer Fixierstelle in einem zweiten Haltebereich in einem Abstand vor der Wickelschablone bezogen auf die Zufuhrrichtung;
d) Verschieben des ersten Haltebereichs relativ zu dem zweiten Haltebereich in einer Richtung parallel zu der Drehachse der Wickelschablone zur Ausbildung eines gegenüber der Zufuhrrichtung geneigten Drahtabschnitts zwischen dem ersten Haltebereich und dem zweiten Haltebereich;
e) Drehen der Wickelschablone um 180° um die Drehachse unter Zufuhr des Drahtpakets aus der Zufuhrrichtung, wobei die Fixierstelle aus dem ersten Haltebereich in einen dritten Haltebereich auf der dem ersten Haltebereich gegenüberliegenden Seite der Wickelschablone und die Fixierstelle aus dem zweiten Haltebereich in den ersten Haltebereich verlagert wird, wodurch sich für das Drahtpaket unter Ausbildung eines Biegebereichs ein um die Wickelschablone reichender Wickelkopf ausbildet;
f) Fixieren des nachträglich zugeführten Drahtpakets an der Fixierstelle in dem zweiten Haltebereich;
g) Wiederholen der Schritte d) bis f), wobei die Haltewirkung an der Fixierstelle im dritten Haltebereich vor oder nach der Wiederholung des Schritts f) gelöst wird und die Haltewirkung an der zweiten Fixierstelle vor der Wiederholung des Schritts e) gelöst wird;
h) Wiederholen der Schritte b) bis g), bis die Spulenwicklung vollständig ist;
i) Durchtrennen des Drahtpakets in einem Bereich des zweiten Haltebereiches;
j) Abstreifen der Spulenwicklung von der Wickelschablone.

Dadurch, dass das Verfahren mit einem Drahtpaket durchgeführt wird, bei dem die Drähte des Drahtpakets parallel zueinander verlaufen und an einem Ende des Drahtpakets paarweise miteinander verbunden sind, ergibt sich der Vorteil, dass die Drähte nachträglich, also nach Herstellung der Spulenwicklung oder nach Einbau der Spulenwicklung in einen Rotor- oder Statorkern mit offenen Nuten nicht verbunden werden müssen. Dadurch wird die Herstellung von Statoren oder Rotoren mit Wellenwicklungen oder Spulenwicklungen erheblich vereinfacht. Das Drahtpaket, aus dem die Spulenwicklung hergestellt wird, kann in Bezug auf die elektrische Konfiguration durch Vorsehen von entsprechenden Verbindungen vorkonfektioniert sein.

Durch diese Vorkonfektionierung in Hinblick auf die elektrische Leitungsführung im Drahtpaket wird zudem die Sicherheit der elektrischen Verbindung der Leiter in der Spulenwicklung erhöht. Nach dem Einbau der Spulenwicklung in den Rotor oder Stator kann nämlich auf eine nachträgliche Verbindung der entsprechenden Drähte des Drahtpakets, aus dem die Spulenwicklung aufgebaut ist, verzichtet werden. Die Konfektionierung der elektrischen Verbindungen kann vorteilhafterweise unter idealen Bedingungen im Vorfeld und nicht erst im eingebauten Zustand der Spulenwicklung im Stator oder Rotor erfolgen. Auf diese Weise ist sichergestellt, dass eine optimale Verbindung der zu verbindenden Drähte erfolgt. Im Gegensatz ist die nachträgliche Verbindung von Drähten von Spulenwicklungen im eingebauten Zustand in einem Stator oder Rotor oftmals nur mit einer Klemm- oder Schraubverbindung möglich, wodurch sich eine geringere Zuverlässigkeit ergibt.

Weiterhin ist es vorteilhaft, dass die Verbindung auf diese Weise besonders platzsparend ausgeführt werden kann, da die Drähte vor der Herstellung der Wellenwicklung oder der Spulenwicklung einzeln miteinander zu verbinden sind. Somit sind kleinere Abmessungen, insbesondere in axialer Richtung, für den Rotor oder Stator erzielbar.

Bevorzugte Weiterbildungen des Verfahrens sind in den Ansprüchen 2 bis 11 angegeben.

In einer Weiterbildung der Erfindung ist vorgesehen, dass das Drahtpaket zunächst dadurch hergestellt wird, dass die doppelte Länge der für die Spulenwicklung benötigten Drähte ermittelt wird und das Drahtpaket durch Umbiegen der Drähte auf der für die Herstellung der Spulenwickelung benötigten Länge hergestellt wird, sodass die Drähte an einem Ende des Drahtpakets paarweise miteinander verbunden sind.

Dadurch sind die paarweise miteinander verbundenen Drähte einstückig ausgebildet, da sie aus einem Draht aufgebaut sind. Die Herstellung einer gesonderten Verbindung entfällt somit. Dies ist vorteilhaft, da ein nach diesem Verfahren hergestelltes Drahtpaket besonders platzsparend ist und eine besonders sichere Verbindung der paarweisen Drähte herstellt.

Nach einer weiteren Ausgestaltung der Erfindung ist vorgesehen, dass das Drahtpaket beginnend mit dem Ende, an dem die Drähte paarweise miteinander verbunden sind, senkrecht zu der Wickelschablone zugeführt wird.

Durch eine solche Zuführung ergibt sich der Vorteil, dass das Ende mit den paarweise verbundenen Drähten zuerst auf der Wickelschablone angeordnet wird. Durch die paarweise Verbindung der Drähte wird die Integrität der Anordnung der Drähte auf der Wickelschablone erhöht. Zudem ergibt sich der weitere Vorteil, dass ein offenes Ende des Drahtpakets, an dem keine paarweise miteinander verbundenen Drähte auf der Seite der Zufuhr angeordnet ist. Dadurch kann die Anordnung der Drähte innerhalb des Drahtpakets während dessen Zuführung geändert werden, sodass die Abfolge der Drähte auf der Wickelschablone variabel gestaltet werden kann.

In einer Weiterbildung des Verfahrens ist vorgesehen, dass das Verschieben in dem Verfahrensschritt d) parallel zur Drehachse der Wickelschablone um ein Wegstück erfolgt, dessen Länge ungefähr gleich der Hälfte des Abstands der äußersten Drähte des Drahtpakets bezogen auf alle Drähte ist, wodurch ein in Bezug zur Drehachse der Wickelschablone geneigter Drahtabschnitt zwischen dem ersten und dem zweiten Haltebereich geformt wird.

Durch das Vorsehen eines Verschiebungsbetrags dessen Länge ungefähr gleich der Hälfte des Abstands der äußersten Drähte bezogen auf alle Drähte ist, bildet sich ein geneigter Drahtabschnitt mit einer für den Einbau einer Spulenwicklung in offene Nuten eines Rotors oder Stators vorteilhaften Geometrie aus. Die somit hergestellte Spulenwicklung kann platzsparend in die offenen Nuten des Stators oder des Rotors eingesetzt werden, ohne, dass der Einsatz der Wellenwicklung oder Spulenwicklung durch deren Geometrie behindert wird. Insbesondere ist diese Ausgestaltung vorteilhaft, da sich so auch Wickelköpfe ausbilden lassen, die in einer axialen Richtung nur minimal über den Körper eines Kerns eines Stators oder eines Rotors überstehen.

Nach einem weiteren Aspekt des Verfahrens ist vorgesehen, dass die Wickelköpfe in dem durch Schritt e) ausgebildeten Biegebereich nachgeformt werden. Hierzu weiterbildend ist vorgesehen, dass zum endgültigen Formen der Wickelköpfe nach dem Verfahrensschritt e) ein profiliertes Formwerkzeug gegen die Wickelköpfe gepresst wird.

Durch das Nachformen können eventuelle Unregelmäßigkeiten in der Formgebung der Wickelköpfe ausgleichen werden. Das Nachformen dient insbesondere auch dazu, einen Überstand der Wickelköpfe über den Statorkern oder Rotorkern weiter zu verkleinern.

Nach einer Weiterbildung ist vorgesehen, dass das Drahtpaket im Schritt b) mittels einer ersten Haltevorrichtung auf der Wickelschablone in dem ersten Haltebereich und in Schritt c) mittels einer zweiten Haltevorrichtung in dem zweiten Haltebereich festgehalten wird.

Nach einer weiteren Ausgestaltung der Erfindung ist für jede der Haltevorrichtungen vorzugsweise vorgesehen, dass deren individuelle Verlagerung parallel zur Drehachse der Wickelschablone möglich ist, damit die Schritte b) bis d) des Verfahrens durchführbar sind. Solche Haltevorrichtungen können als aktive Klemmen ausgestaltet sein oder Führungskanäle sein, durch die die Drähte laufen, oder die auf die Drähte aufgesetzt werden. Es kann also genügen, Haltevorrichtungen mit einer geeigneten Geometrie auf die Drähte aufzusetzen, die dann einen hinreichenden Halt gegen ein Durchrutschen beim seitlichen Verschieben bieten. Die Klemmvorrichtung, die in dem zweiten Haltebereich zum Einsatz kommt, ist in einer vorteilhaften Ausgestaltung der Erfindung Teil einer Draht- oder Drahtpaketzufuhr. In einer weiteren optionalen Ausgestaltung der Erfindung trägt die Klemmvorrichtung in dem zweiten Haltebereich dazu bei, eine mechanische Spannung in dem Drahtpaket oder den Drähten zwischen dieser Klemmvorrichtung und der Klemmvorrichtung in dem ersten Haltebereich herzustellen. Alternativ oder zusätzlich hierzu kann die Klemmvorrichtung in dem zweiten Haltebereich eine mechanische Spannung in dem Drahtpaket oder den Drähten zwischen einer Drahtzufuhr und dieser Klemme herstellen. Die Haltevorrichtungen sind nach einem weiteren Aspekt der Erfindung nicht an den jeweiligen Haltebereich gebunden sondern können zwischen den drei Haltebereichen bewegt werden, so dass sie die Haltewirkung nicht nur während ihres Verschiebens sondern auch während des Drehens der Wickelschablone aufrechterhalten können.

Durch eine weitere Ausgestaltung der Erfindung ergibt sich, dass der erste Haltebereich, der dritte Haltebereich und der zweite Haltebereich in Drehrichtung der Wickelschablone in dieser Reihenfolge aufeinander folgen und jede Haltevorrichtung mit einer Drehung nach Schritt e) von einem Haltebereich zu einem in Drehrichtung nachfolgenden Haltebereich überführt wird.

Auf diese Weise kann das Lösen der Haltewirkung im dritten Haltebereich beispielweise vor Schritt f) erfolgen und die Verlagerung der Haltevorrichtung aus dem dritten in den zweiten Haltebereich kann im Rahmen des nächsten Drehvorganges der Wickelschablone ausgeführt werden. Die Haltevorrichtungen bewegen sich mit bei Drehvorgängen der Wickelschablone aus dem ersten in den dritten Haltebereich, dann beim nächsten Drehvorgang vom dritten in den zweiten Haltebereich und schließlich wieder vom zweiten in den ersten Haltebereich, von wo aus sich die Bewegungsfolge dann bei einem Weiterdrehen der Wickelschablone wiederholt.

Nach einer Weiterbildung der Erfindung ist vorgesehen, dass das Durchtrennen des Drahtpakets im Schritt i) in einer Drehstellung der Wickelschablone erfolgt, in welcher das Ende des Drahtpakets mit den paarweise miteinander verbundenen Drähten auf der Seite des zweiten Haltebereichs liegt.

Somit ergibt sich besonders vorteilhaft, dass der Anfang und das Ende der Spulenwicklung bzw. des Drahtpakets in einem eingesetzten Zustand axial gesehen auf derselben Seite eines Rotors oder Stators angeordnet sind. Dies erleichtert den elektrischen Anschluss und den etwaigen Zugriff auch die paarweise Verbindung der Drähte, wenn dies erforderlich sein sollte. Nach einem weiteren Aspekt der Erfindung ist vorgesehen, dass das Durchtrennen des Drahtpakets im Schritt i) in einer Drehstellung der Wickelschablone erfolgt, in welcher das Ende des Drahtpakets mit den paarweise miteinander verbundenen Drähten auf der gegenüberliegenden Seite des zweiten Haltebereichs liegt. Durch einen solchen Verfahrensablauf kann die Anordnung der offenen Enden der Spulenwicklung axial gesehen nach Einbau der Spulenwicklung in einen Rotor oder Stator auf einer anderen Seite des Rotors oder des Stators liegen, wodurch sich insbesondere in Hinblick auf den Anschluss und auf die Ausnutzung von Bauraum Vorteile ergeben können.

Nach einem weiteren Aspekt der Erfindung ist vorgesehen, dass die paarweise verbundenen Drähte im Laufe des Verfahrens bei der Zufuhr vor dem Erreichen des zweiten Haltebereiches einmal oder mehrmals paarweise mit anderen paarweise verbundenen Drähten vertauscht werden.

Durch das Vertauschen der paarweise miteinander verbundenen Drähte ergibt sich für eine in offene Nuten eines Rotors oder Stators eingesetzte Spulenwicklung hinsichtlich der Stromführung der Vorteil, dass die paarweise verbundenen Drähte in den offenen Nuten jeweils radial gesehen unterschiedliche Positionen einnehmen können. Dadurch ist in vorteilhafter Weise das Entstehen von Wirbelströmen vermindert.

In einer alternativen Ausgestaltung des Verfahrens ist vorgesehen, dass das Drahtpaket vor der Durchführung des Verfahrensschritts a) abgelängt ist und die Zufuhr des für die Spulenwicklung zum Einsatz kommenden Drahtpakets in Schritt a) mit den an einem Ende des Drahtpakets paarweise nicht miteinander verbundenen Drähten in einer Zufuhrrichtung senkrecht zu der Wickelschablone erfolgt und, dass Schritt i) entfällt.

Auf diese Weise gestaltet sich das Verfahren etwas einfacher, da ein Verfahrensschritt entfällt. Naturgemäß ergibt sich dadurch eine geringere Taktzeit. Zudem ist auf der Seite der Drahtzufuhr durch die paarweise miteinander verbundenen Drähte eine bessere Integrität des Drahtpakets gegeben, sodass die Drahtzufuhr einfacher ausgestaltet werden kann.

Anspruch 12 betrifft nach einem weiteren Aspekt der Erfindung einen Stator oder Rotor einer elektrischen Maschine mit einer nach dem erfindungsgemäßen Verfahren hergestellten Spulenwicklung, wobei eine mittels des Verfahrens hergestellte Spulenwicklung derart in die Nuten eingesetzt ist, dass in einer ersten Nut von zwei aufeinanderfolgenden Nuten eine erste Hälfte von zwischen zwei Wickelköpfen angeordneten Drähten der Spulenwicklung eingesetzt ist und in einer zweiten von zwei aufeinanderfolgenden Nuten eine zweite Hälfte von zwischen zwei Wickelköpfen angeordneten Drähten der Spulenwicklung eingesetzt ist. Es ist vorgesehen, dass das Ende der Spulenwicklung mit den paarweise miteinander verbundenen Drähten und das Ende der Spulenwicklung mit dem durchtrennten Drahtpaket auf derselben Seite des Stators oder des Rotors liegen.

Durch das Einsetzen einer mittels des Verfahrens hergestellten Spulenwicklung in einen Rotor oder Stator bzw. einen Rotorkern oder Statorkern ergibt sich der Vorteil, dass dieser besonders platzsparend ausgeführt werden kann, da die Drähte vor der Herstellung der Wellenwicklung oder der Spulenwicklung einzeln miteinander zu verbinden sind. Somit sind kleinere Abmessungen, insbesondere in axialer Richtung, für den Rotor oder Stator erzielbar, da kein zusätzlicher Bauraum für die Verbindung vorgehalten werden muss.

Nachfolgend wird anhand der beigefügten Zeichnungen näher auf Ausführungsbeispiele der Erfindung eingegangen. Es zeigen:
- Fig. 1 bis 11: eine Abfolge eines Verfahrens zur Herstellung einer Spulenwicklung, wobei im oberen Abschnitt a jeweils eine schematische stirnseitige Ansicht einer Wickelvorrichtung mit drei umlaufenden Haltevorrichtungen zur Durchführung des Verfahrens, im mittleren Abschnitt b jeweils eine Draufsicht auf die Wickelvorrichtung und im unteren Abschnitt c jeweils nur die mit diesem Schritt bereits erzeugten Spulenwindungen in Draufsicht gezeigt sind;
- Fig. 12 bis 14: eine Abfolge von Schritten zur Herstellung eines Drahtpakets mit an einem Ende des Drahtpakets paarweise miteinander verbundenen Drähten;
- Fig. 15: eine Draufsicht auf eine nach dem Verfahren hergestellte Spulenwicklung;
- Fig. 16: eine Ansicht eines Stators, in dessen Nuten die Wicklung aus Fig. 15 aufgenommen ist.

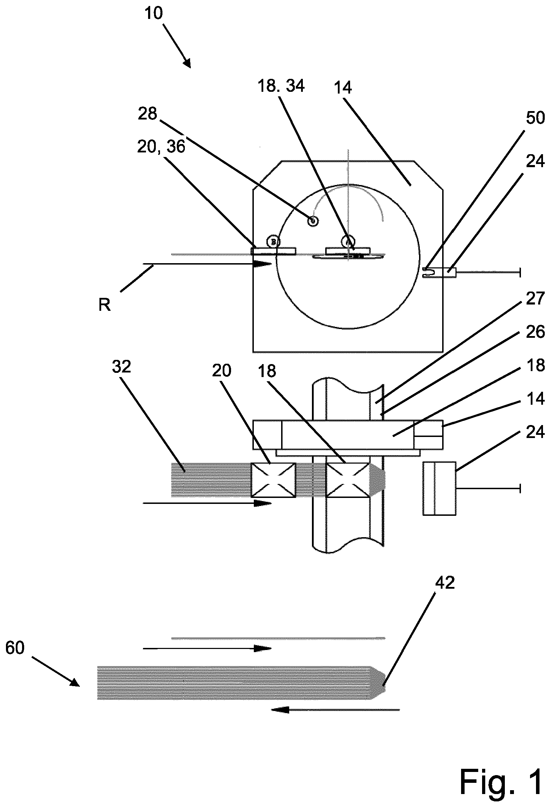

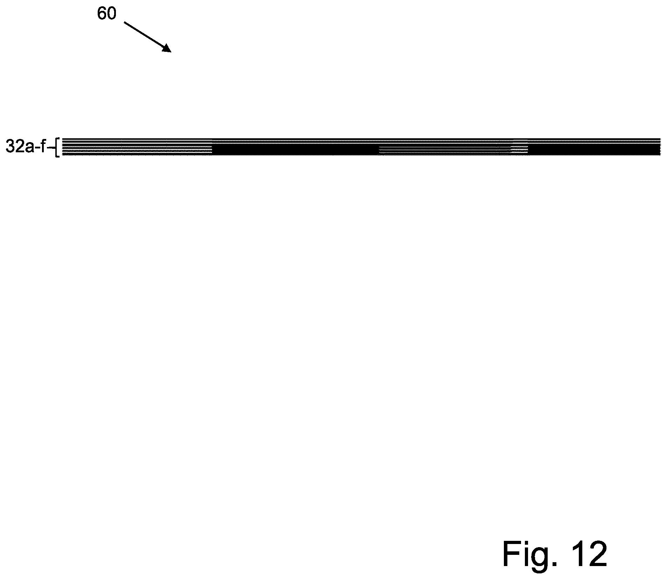

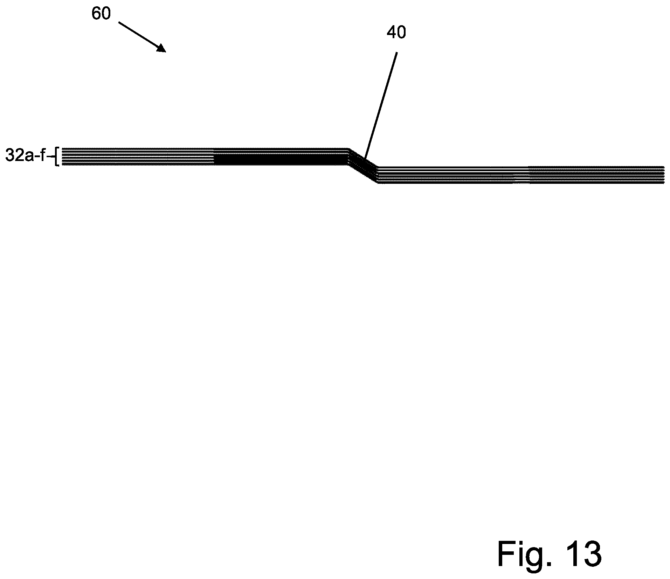

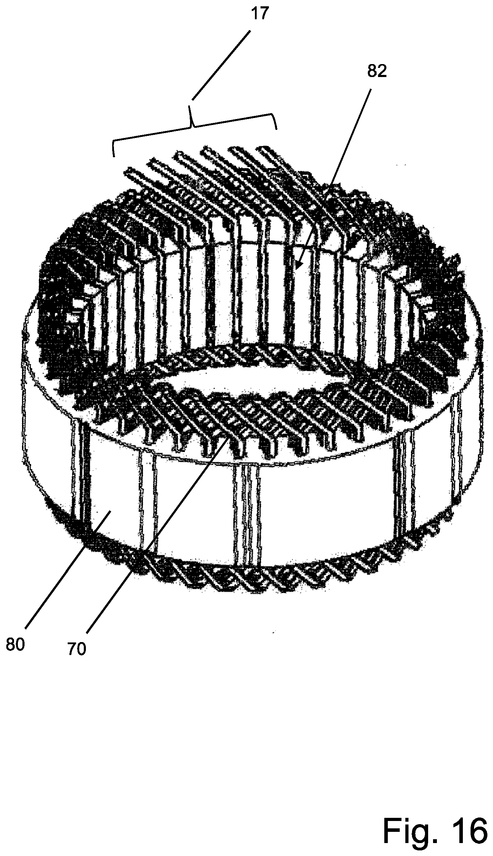

Fig. 1 zeigt die Ausgangsposition zu Beginn eines Verfahrens zur Herstellung einer Spulenwicklung 70 (vgl. Fig. 16) für einen Stator eines Elektromotors (nicht gezeigt) mit einem Drahtpaket 60, das nach den in Fig. 12 bis 15 dargestellten Schritten hergestellt worden ist. Eine solche Spulenwicklung 70 oder verteilte Wellenwicklung wird auch als Stabwellenwicklung bezeichnet.

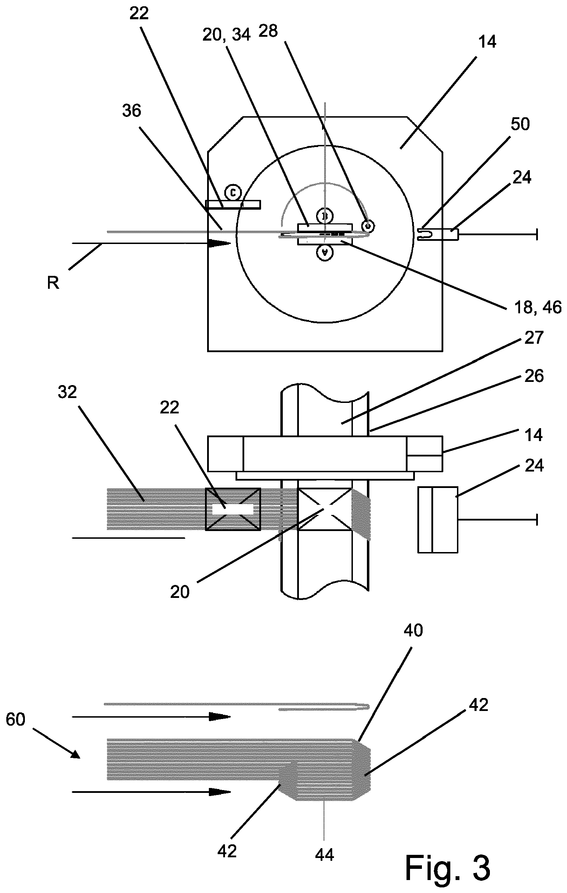

Hierzu steht im gezeigten Ausführungsbeispiel eine Wickelvorrichtung 10 bereit, die einen Wickelkopf mit einer Drahthandhabungsvorrichtung 14 besitzt, die drei Haltevorrichtungen 18, 20, 22 (siehe auch Fig. 3) und eine Wickelkopfformvorrichtung 24 aufweist.

Die Wickelvorrichtung 10 arbeitet mit einer Wickelschablone 26 zusammen, die als Flachschablone ausgebildet ist, d.h. eine leistenartige Formgebung besitzt. Der Querschnitt der Wickelschablone 26 wird im oberen Teil der Darstellung von Fig.1 gezeigt, aus welcher die sich zu den Flanken hin verjüngenden Randbereiche 27 der Wickelschablone 26 und ein Radius der Flanken selbst deutlich werden.

Die Länge der Wickelschablone 26, die nicht in voller Länge gezeigt ist, bestimmt sich nach der Länge der zu herzustellenden Spulenwicklung 70 und der genauen Ausgestaltung des Verfahrens, wobei die Länge der Wickelschablone 26 nicht der Länge der Spulenwicklung 70 entsprechen muss. Die Wickelschablone 26 kann beispielsweise dann erheblich kürzer als die Spulenwicklung 70 sein, wenn die Spulenwicklung 70 im Laufe des Verfahrens bereits sukzessive von der Wickelschablone 26 an eine Übertragungsvorrichtung (nicht gezeigt) weitergegeben wird.

Der Wickelvorrichtung 10 ist außerdem eine Drahtrollvorrichtung 28 zugeordnet, die während der Rotationsvorgänge ein Rollformen zu verarbeitender Drähte 32 zur besseren Anlage an der Wickelschablone 26 durchführt.

Der Ablauf des Verfahrens gestaltet sich wie folgt. Gemäß Fig.1 befindet sich eine erste Haltevorrichtung (A) 18 in einer von der Wickelschablone 26 beabstandeten Wartestellung.

Eine zweite Haltevorrichtung (B) 20 befindet sich in einer gelösten Ruhestellung, so dass das durchlaufende Drahtpaket 60 nicht verklemmt ist. Im gezeigten Ausführungsbeispiel wird ein Drahtpaket 60 mit zwölf jeweils paarweise verbundenen Drähten 32 verarbeitet. Die Drähte 32 sind parallel zueinander geführt.

Ausgehend von Fig.1 wird das Drahtpaket 60 auf der Wickelschablone 26 derart angeordnet, dass dessen Wickelkopf 42 auf der Wickelschablone 26 zumindest teilweise aufliegt. Das Drahtpaket 60 kann dabei die noch nicht verklemmte zweite Haltevorrichtung (B) 20 ungehindert passieren.

Nachfolgend wird die erste Haltevorrichtung (A) 18 aus ihrer Ruhelage in eine an die Wickelschablone 26 angenäherte oder anliegende Haltestellung bewegt. Mit dem Auslösen wird eine erste Haltestelle in einem ersten Haltebereich 34 an der Oberseite der flachen Wickelschablone 26 definiert. In zeitlicher Nähe zum Verklemmen des Drahtpakets 60 im ersten Haltebereich 34 erfolgt ein Auslösen der zweiten Haltevorrichtung (B) 20, so dass ein zweiter, in einem bestimmten Abstand zum ersten Haltebereich 34 liegender zweiter Haltebereich 36 der Drähte definiert wird. Der zweite Haltebereich 36 liegt in der Zufuhrrichtung R neben dem ersten Haltebereich 34.

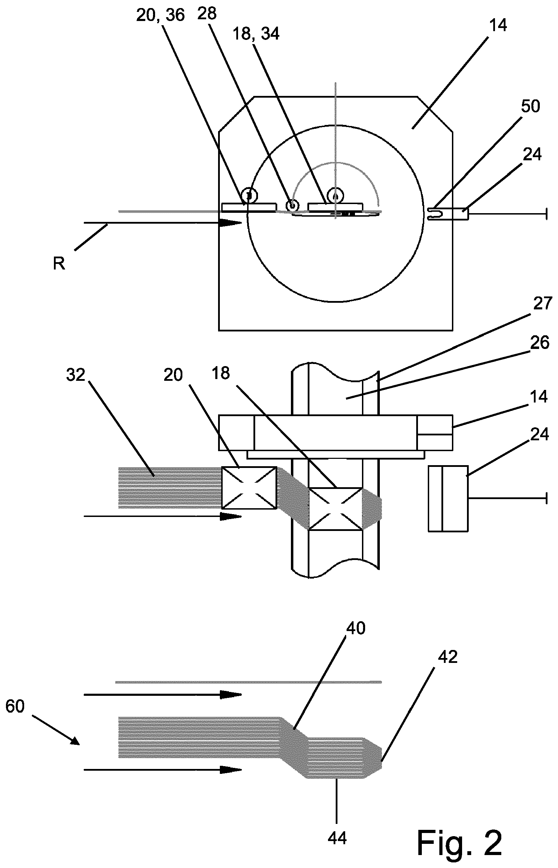

Weiterhin ist in Fig. 2 ein Verfahrensschritt veranschaulicht, bei welchem geneigte Drahtabschnitte 40 erzeugt werden. Diese Drahtabschnitte 40 bilden später weitere Wickelköpfe 42 zwischen geraden Schenkeln 44, die in Nuten eines Stators oder Rotors zu lieken kommen. Auf die Wickelköpfe 42 wird im nachfolgenden Verfahrensschritt und auch später noch näher eingegangen.

Gut erkennbar ist in Fig. 2 gegenüber Fig. 1 auch, dass sich die zweite Haltevorrichtung 20 durch einen Verschiebschritt an eine Drahthandhabungsvorrichtung 14 angenähert wird, weil die Länge der geneigten Abschnitte 40 vorzugsweise dem Abstand zwischen dem ersten Haltebereich 34 und dem zweiten Haltebereich 36 in Fig. 3 entsprechen soll. Diese Nachstellbewegung ist geführt und kann durch eine aktive Nachführung oder durch eine passive Ausgleichsbewegung erfolgen.

Nach dem in Fig. 2 gezeigten Schritt des Verschiebens der im ersten Haltebereich 34 fixierten Drahtabschnitte relativ zu dem im zweiten Haltebereich 36 fixierten Drahtabschnitte unter Ausbildung der geneigten Drahtabschnitte 40 wird die Drehvorrichtung 28 aktiviert und dreht die Wickelschablone 26 sowie die ebenfalls mit ihr in Drehrichtung gekoppelte erste Haltevorrichtung (A) 18 aus dem ersten Haltebereich 34 in einen in Fig. 3 gezeigten dritten Haltebereich 46, wobei die zweite Haltevorrichtung (B) 20, die unverändert mit den Drähten 32 verklemmt ist, aus dem zweiten Haltebereich 36 in den ersten Haltebereich 34 mitgenommen wird und dabei das Drahtpaket 50 in Zufuhrrichtung R weiter nachgeführt wird.

Der geneigte Drahtabschnitt 40 wird durch die Rotation der Wickelschablone 26 in die bereits angesprochenen dachförmigen Wickelköpfe 42 überführt, weil sich die Drähte 32 an die Flanken 27 der Wickelschablone 26 anschmiegen, wobei die Wickelköpfe 42 sich zu Wendestellen 48 hin entsprechend der Form der Flanken 27 verjüngen. An den Wendestellen 48 selbst werden Biegeradien für jeden der Drähte 32 des Drahtpakets 60 ausgebildet. In Fig. 3 ist auch erstmals die dritte Haltevorrichtung (C) 22 gezeigt, die sich hier aber noch in einer Ruhestellung befindet, weil sie erst später in den Verfahrensablauf eingreift.

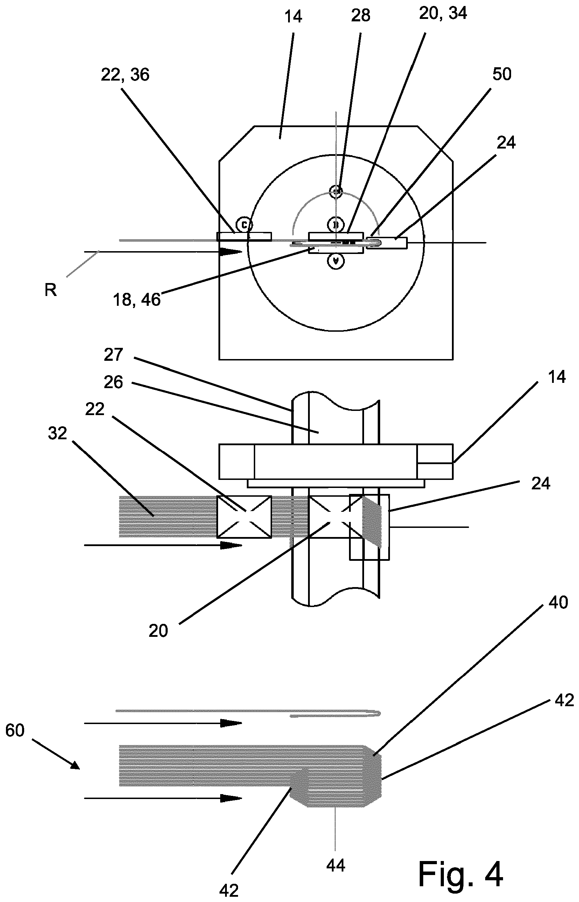

In Fig. 4 ist ein optionaler Schritt veranschaulicht, in welchem mittels der Drahtformvorrichtung 24 die zuvor erzeugten Wickelköpfe 42 eine endgültige Form erhalten. Die Drahtformvorrichtung 24 besitzt ein Formelement 50, das als Negativform der Wickelköpfe 42 in ihrer angestrebten Endform ausgebildet ist und unter Druck gegen die Wickelköpfe 42 angedrückt wird.

Zur Vorbereitung der nächsten Verfahrensschritte wird die dritte Haltevorrichtung (C) 22 in den zweiten Haltebereich 36 bewegt. Die erste Haltevorrichtung (A) 18 kann auch bereits gelöst werden, kann aber auch noch über den nächsten Verfahrensschritt mit den Drähten 32 des Drahtpakets 60 im dritten Haltebereich 46 verklemmt bleiben.

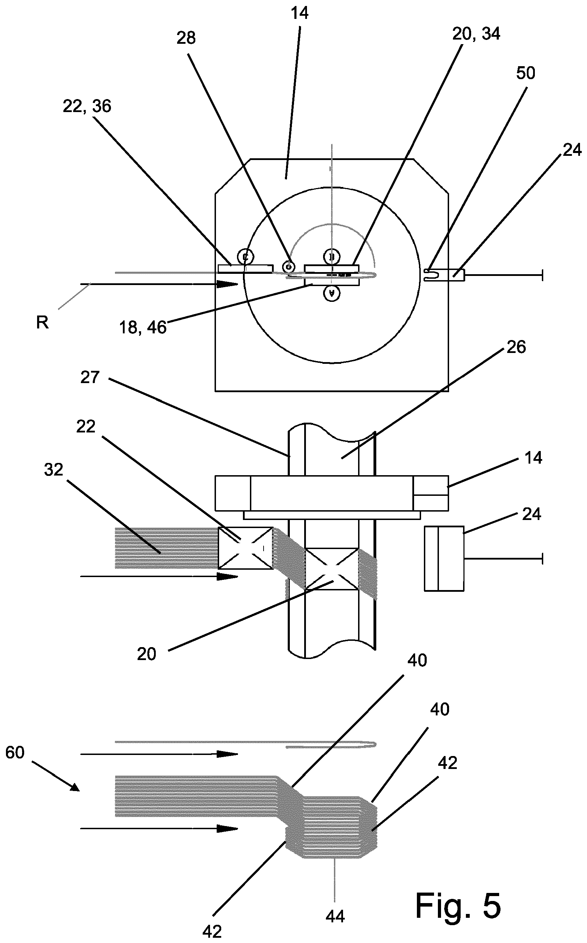

Der nächste Verfahrensschritt, der in Fig. 5 gezeigt ist, sieht wiederum das Ausbilden geneigter Drahtabschnitte 40 zwischen der zuvor durch Auslösen der dritten Haltevorrichtung (C) 22 erzeugten Haltestelle im zweiten Haltebereich 36 und dem durch die nach wie vor verklemmte zweite Haltevorrichtung (B) 20 vor, die sich noch im ersten Haltebereich 34 befindet.

Dies geschieht wiederum durch relatives axiales Verschieben der verklemmten Haltevorrichtungen (hier: Haltevorrichtung (B) 20 und Haltevorrichtung (C) 22) im ersten und zweiten Haltebereich 34, 36 parallel zur Drehachse der Wickelschablone 26.

Sofern die dritte Haltevorrichtung (C) 22 noch verklemmt ist, was aus Gründen der Stabilisierung des bereits erzeugten Teils der Spulenwicklung 70 vorteilhaft sein kann, bewegt sich die Haltevorrichtung (A) 18 im dritten Haltebereich 46 mit der Haltevorrichtung (B) 20 im ersten Haltebereich gemeinsam axial relativ zur Haltevorrichtung (C) 22 im zweiten Haltebereich 36.

In Fig. 5 unten ist zu erkennen, dass nach diesem Schritt ein im Schritt gemäß Fig. 2 erzeugter erster Abschnitt paralleler Schenkel 44 in seitlichem Versatz den Drähten 32 des aus der Zufuhrrichtung R zugeführten Drahtpakets 60 an der Unterseite der Wickelschablone 26 befindet.

Dies bedeutet, dass bei dem nachfolgenden erneuten Durchführen eines Wickelvorganges um 180° durch entsprechendes Drehen der Wickelschablone 26 der erzeugte erste Drahtabschnitt nicht mit nachfolgenden Drähten ins Gehege kommt. Sinngemäß gelten im Übrigen die Ausführungen zu Fig. 3 auch für den Wickelvorgang gemäß Fig. 5, wobei sich die Haltevorrichtung 18, 20, 22 aber in jeweils anderen Haltebereichen befinden.

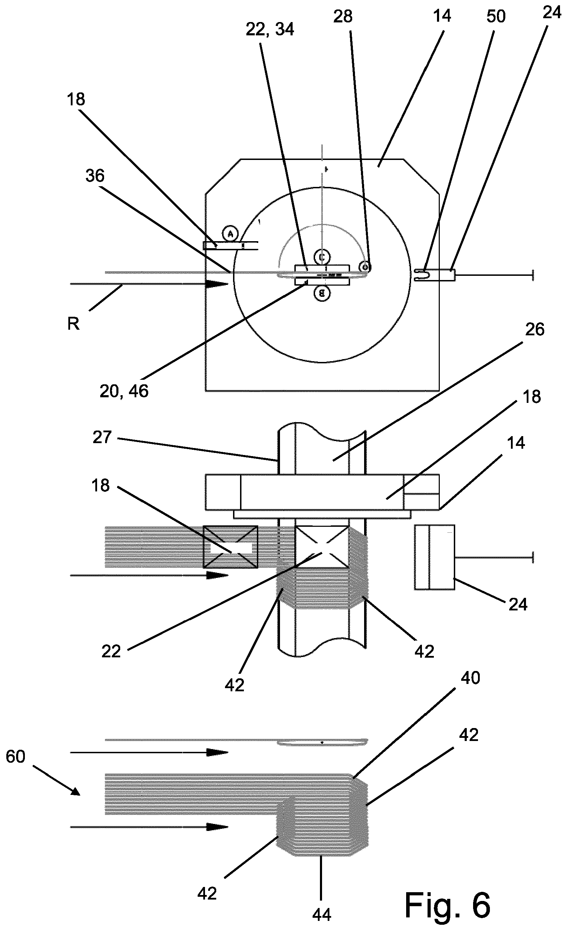

Fig. 6 (unten) zeigt eine vollständige erste Windung der späteren Spulenwicklung auf der Wickelschablone 26 mit Wickelköpfen 42 auf beiden Seiten der geraden Schenkel 44, die später in den Nuten des Stators oder Rotors 80 liegen.

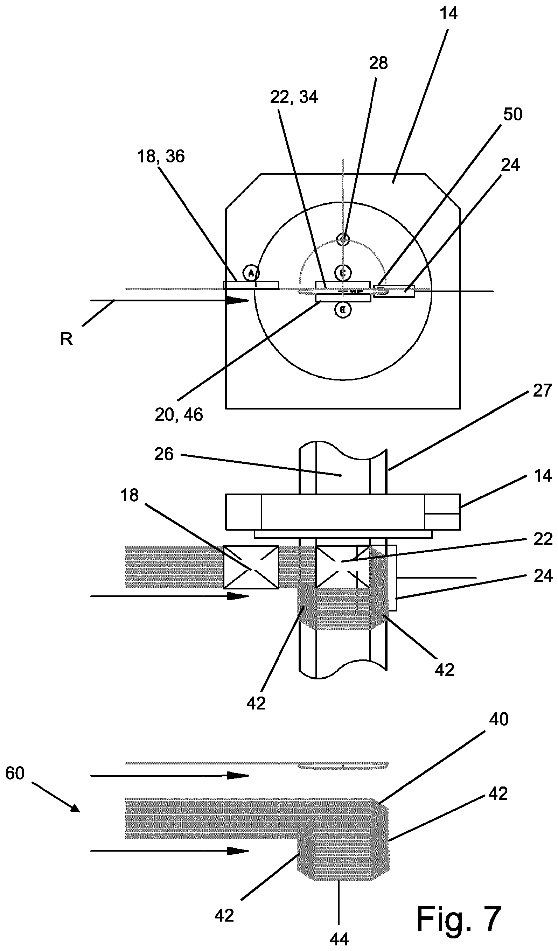

Es schließt sich wiederum, wie in Fig. 7 veranschaulicht ist, ein optionaler Schritt der Formung der Wickelköpfe 42 mittels des Formelements 50 der Drahtformvorrichtung 24 an, der bereits im Zusammenhang mit Fig. 4 erläutert worden ist, um die Formgebung der Wickelköpfe 42 zu optimieren.

Nachfolgend werden entsprechend der Anzahl der erforderlichen Windungen der Spulenwicklung 70 die in Fig. 2 bis 7 gezeigten Verfahrensschritte wiederholt, wobei sich aber die Anordnung der Haltevorrichtungen 18, 20 und 22 ändert und nicht immer der dort gezeigten Position der Haltevorrichtungen entspricht, da diese ihre relative Position nach jedem Durchlauf ändern, wie bereits aus der unterschiedlichen Anordnung in Fig. 2 bis 4 einerseits und Fig. 5 bis 7 für den Fachmann ohne weiteres ersichtlich ist.

Die Abfolge wiederholt sich aber selbstverständlich regelmäßig, so dass mit jedem dritten Wickelvorgang um 180° die Haltevorrichtungen 18, 20, 22 wieder in ihre jeweilige Position zurückkehren.

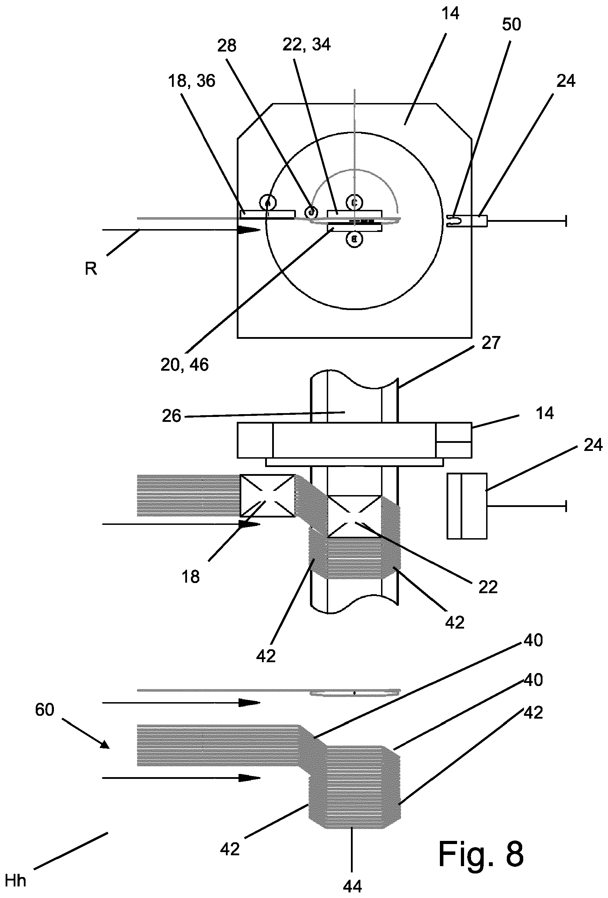

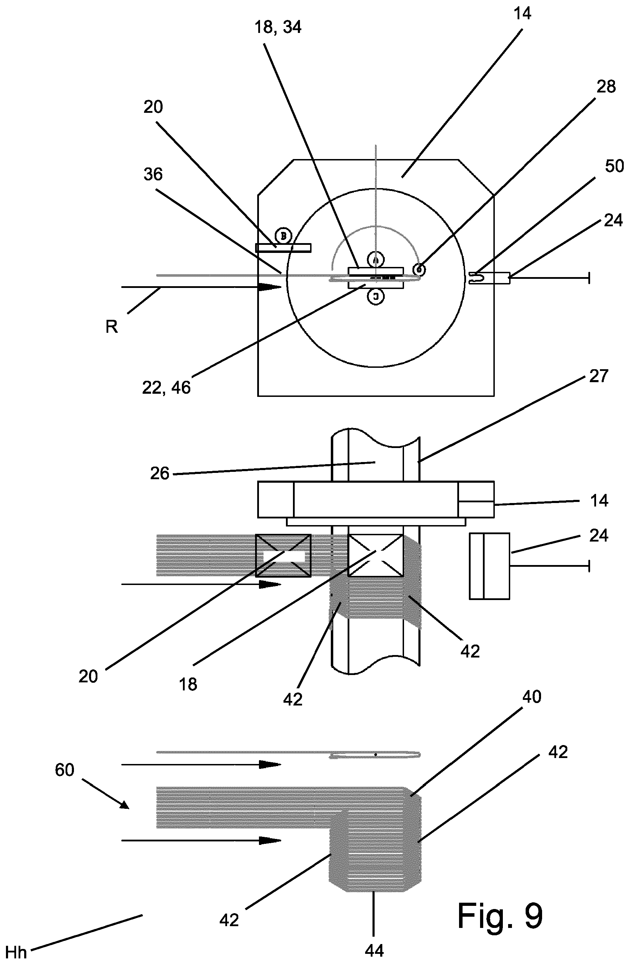

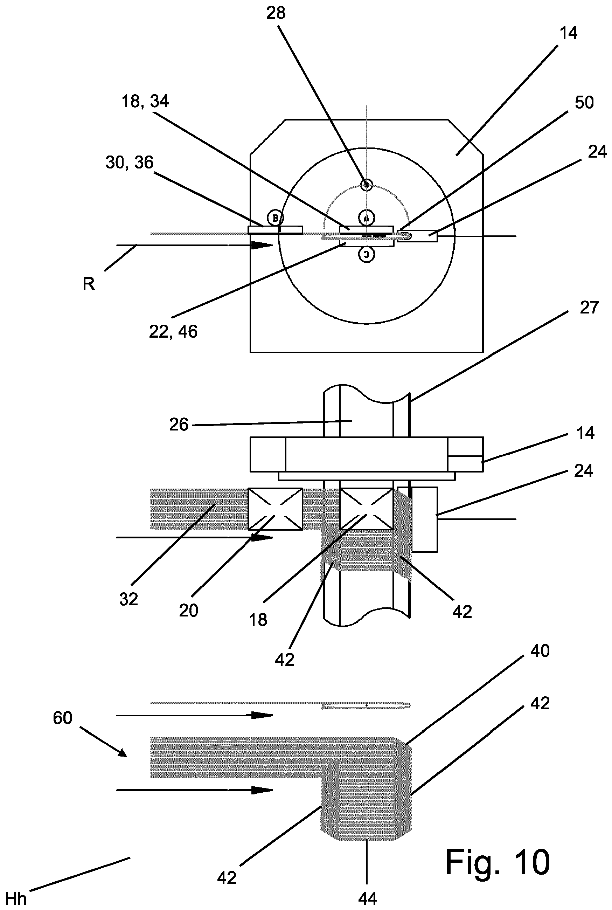

Fig. 8 bis 10 zeigen einen letzten Ablauf der Verfahrensschritte gemäß den Fig. 5 bis 7, wobei die Anordnung der Haltevorrichtungen 18, 20 und 22 gemäß der oben beschriebenen Abfolge sich jeweils an einer anderen Haltestelle 34, 36, 46 befinden.

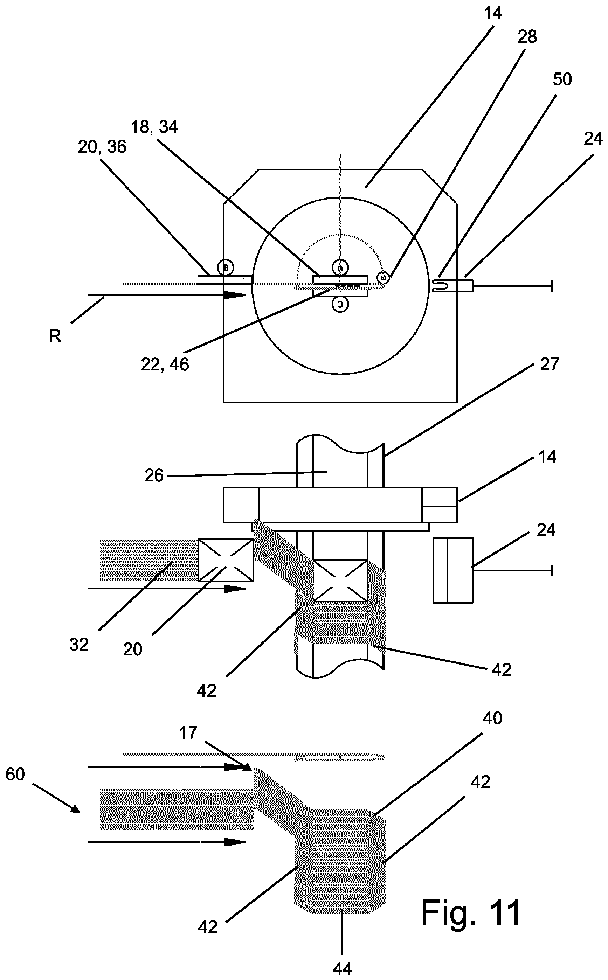

Der finale Schritt zum Herstellen der vollständigen Spulenwicklung 70 ist in Fig. 11 gezeigt. Zu diesem Zeitpunkt ist eine Anzahl gerader Schenkel 44 erzeugt worden, die für die Bestückung der Rotor- oder Statornuten 82 gewünscht ist. In Fig.11 ist jedoch der besseren Übersichtlichkeit wegen nur eine verkürzte Spulenwicklung 70 gezeigt.

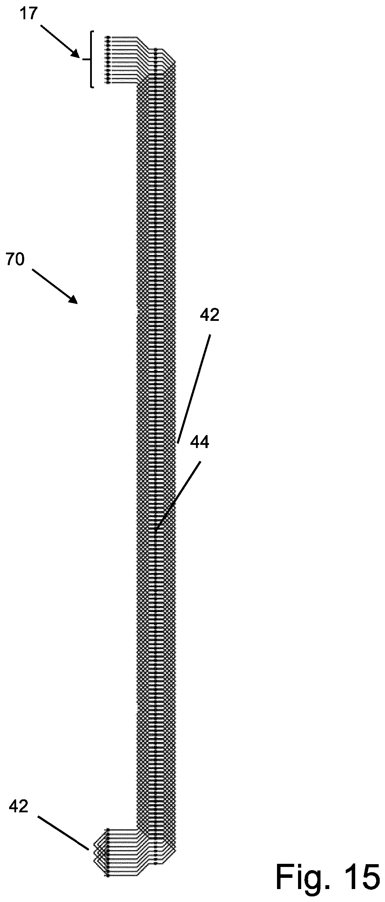

Durch das oben beschriebene Verfahren wird erreicht, dass alle Anschlussdrähte 17 (vgl. Fig. 15) der fertigen Spulenwicklung 70 auf einer Seite liegen.

Fig. 11 zeigt einen letzten Verfahrensschritt. Bevor die fertige Spulenwicklung 70 mittels einer Schneidvorrichtung (nicht gezeigt) vom dem zugeführten Drahtpaket 60 getrennt wird, wird zunächst ein abschließender Verschiebevorgang des ersten Haltebereiches 34 (hier wieder unter Einsatz der verklemmten ersten Haltevorrichtung (A) 18) relativ zum zweiten Haltebereich 36 (hier Haltevorrichtung (B) 20) parallel zur Drehachse der Wickelschablone 26. Nach dem Abschneiden der Drähte 32 bilden die bezüglich der Schenkel 44 geneigten Drahtenden Anschlussdrähte 17, die als elektrische Anschlüsse für die Spulenwicklung 70 dienen. Nach dem Abschneiden der Drahtenden vom zugeführten Drahtpaket 60 wird die fertige Spulenwicklung 70 dann in an sich bekannter Weise in den Stator 80 oder Rotor übertragen, wobei sie zunächst von der Wickelschablone abgestreift wird und ggf. in einem Zwischenschritt in eine nicht dargestellte Übertragungsvorrichtung eingelegt wird.

Nicht festgelegt ist das Verfahren insbesondere im Hinblick auf die Anzahl der parallel verarbeiteten Drähte, die im gezeigten und beschriebenen Ausführungsbeispiel mit zwölf angegeben ist. Für ein verteiltes Wellenmuster der Spulenwicklung 70 kann jede beliebige gerade Anzahl von Drähten parallel verarbeitet werden. Für den Fall, dass ein nicht-verteiltes Wellenmuster für eine Wicklung hergestellt werden soll, eignet sich das Verfahren aber praktisch für jede beliebige Anzahl von Drähten 32. Wie bereits erwähnt, ist das Verfahren insbesondere für die Herstellung von Spulenwicklungen 70 aus Flachdrähten gedacht, die einen rechteckigen Querschnitt aufweisen.

In den Fig. 12 bis 14 ist dargestellt, wie das in dem ersten Verfahrensschritt der Wickelvorrichtung 10 zugeführte Drahtpaket 60 hergestellt wird. Das Drahtpaket 60 wird zunächst dadurch hergestellt, dass die doppelte Länge der für die Spulenwicklung 70 benötigten Drähte 32 ermittelt wird (Fig. 12) und die Drähte 32 bzw. das Drahtpaket 60 bereitgestellt werden.

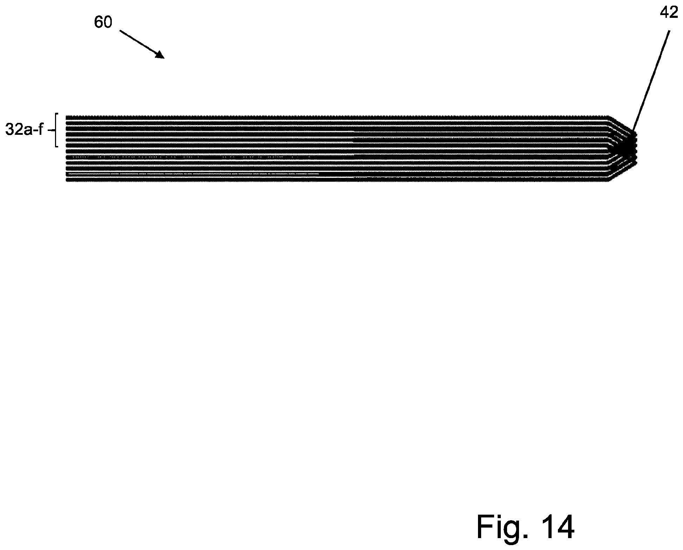

Fig. 12 und 14 zeigen, wie die Verbindung der Drähte 32 für das Drahtpaket 60 hergestellt wird. Die geschieht durch Umbiegen der Drähte 32 auf der für die Herstellung der Spulenwickelung 70 benötigten Länge, sodass die Drähte 32 an einem Ende des Drahtpakets 60 paarweise miteinander verbunden sind. Hierfür kann eine Vorrichtung, wie sie für das Verfahren gem. Fig. 1 bis 11 eingesetzt wird, verwendet werden, wobei der erste Wickelkopf 42 (vgl. Fig. 14) vorzugsweise in etwa auf der Hälfte der ermittelten Drahtlänge mittels des oben beschriebenen Verfahrens durch Verschieben der Haltevorrichtungen zur Herstellung der geneigten Drahtabschnitte 40 und durch Drehen der Wickelschablone 26 hergestellt wird.

In Fig. 15 ist eine vorgefertigte Spulenwicklung 70 im flachen Zustand gezeigt, wobei diese Lage dem Zustand entspricht, in welchem die Spulenwicklung 70 auf der leistenförmigen Wickelschablone 26 liegt, die aber nicht gezeigt ist. Bei dieser dargestellten Spulenwicklung 70 handelt es sich im eine Spulenwicklung 70, die aus einem Drahtpaket 60 aus ursprünglich sechs Einzeldrähte 32a-f gemäß Fig. 12 bis 14 hergestellt wurde, sodass an einer Seite der Spulenwicklung 70 nach Durchlaufen des Herstellungsverfahrens gem. Fig. 1 bis 11 zwölf Anschlussdrähten 17 zur Verfügung stehen.

An der grundsätzlichen Vorgehensweise bei dem Verfahren ändert sich nichts, wenn beispielweise nicht sechs parallele Drähte 32 zur Herstellung des Drahtpakets 60 zugeführt werden, sondern nur drei oder ein anderes ganzzahliges Vielfaches von drei. Entsprechend vermindert oder erhöht sich der axiale Weg beim Verschieben und Ausbilden der geneigten Übergangsbereiche 40 zwischen den geraden Schenkeln 44.

Fig. 16 zeigt als Beispiel einen Stator 80, in welchen die Spulenwicklung 70 in Statornuten 82 eingelegt ist. Die Anschlussdrähte 17 liegen auf einer axialen Stirnseite des Stators 80, was ihren Anschluss erleichtert. Bei dem gezeigten Ausführungsbeispiel ist auch zu erkennen, dass die Länge der Spulenwicklung 70 ein Mehrfaches des Umfangs des Stators 80 beträgt, beim gezeigten Ausführungsbeispiel die doppelte Länge. Insbesondere bei rechteckförmigen Querschnitten lassen sich mit derart hergestellten Statoren hervorragende Füllungsgrade der Nuten 82 erreichen, so dass die kompakt bauenden Motoren eine hohe Leistungsfähigkeit besitzen. In diesem Ausführungsbeispiel eines Stators mit einer eingesetzten Spulenwicklung 70 ist eine Spulenwicklung 70 mit sechs Anschlussdrähten gezeigt, wobei auch eine obig beschriebene Spulenwicklung 70 mit einer Anzahl von Drähten 32, die einem anderen ganzzahligen Vielfachen von drei entspricht, eingesetzt werden.

### Bezugszeichenliste

- 10: Wickelvorrichtung
- 14: Drahthandhabungsvorrichtung
- 17: Anschlussdrähte
- 18: erste Haltevorrichtung
- 20: zweite Haltevorrichtung
- 22: dritte Haltevorrichtung
- 24: Drahtformvorrichtung
- 26: Wickelschablone
- 26: Wickelschablone
- 27: Flanken
- 32: Drähte
- 32a-32f: Einzeldraht
- 34: erste Haltestelle
- 36: zweite Haltestelle
- 40: geneigte Drahtabschnitte
- 42: Wickelkopf
- 44: gerade Schenkel
- 46: dritte Haltestelle
- 50: Formelement
- 60: Drahtpaket
- 70: Spulenwicklung
- 80: Stators
- 82: Statornuten

- R: Zufuhrrichtung

## Patentansprüche

1. Verfahren zur Herstellung einer Spulenwicklung (70) zur Einlage in radial offene Nuten (82) in einen Rotor oder Stator (80) einer elektrischen Maschine, wobei die Spulenwicklung (70) ein Drahtpaket (60) aufweist, das aus einer Anzahl von Drähten (32) besteht, wobei die Drähte (32) des Drahtpakets (60) parallel zueinander verlaufen und an einem Ende des Drahtpakets (60) paarweise miteinander verbunden werden und die jeweils paarweise miteinander verbundenen Drähte einstückig aus einem jeweils durchgängigen Einzeldraht (32a,32b,32c,32d,32e,32f) gebildet und derart an einem Ende des Drahtpakets (60) umgebogen werden, dass die Form der Umbiegungen aller durchgängigen Einzeldrähte (32a,32b,32c,32d,32e,32f) der Form eines Wickelkopfs (42) entspricht, wobei weiterhin die Spulenwicklung (70) durch eine flache und um eine Drehachse drehbare Wickelschablone (26) geformt wird, aufweisend die Verfahrensschritte:
a) Zufuhr des für die Spulenwicklung (70) zum Einsatz kommenden Drahtpakets (60) senkrecht zu der Wickelschablone (26);
b) Halten des Drahtpakets (60) an einer Fixierstelle in einem ersten Haltebereich (34) auf der Wickelschablone (26);
c) Halten des Drahtpakets (60) an einer Fixierstelle in einem zweiten Haltebereich (36) in einem Abstand vor der Wickelschablone (26) bezogen auf die Zufuhrrichtung (R);
d) Verschieben des ersten Haltebereichs (34) relativ zu dem zweiten Haltebereich (36) in einer Richtung parallel zu der Drehachse der Wickelschablone (26) zur Ausbildung eines gegenüber der Zufuhrrichtung (R) geneigten Drahtabschnitts (40) zwischen dem ersten Haltebereich (34) und dem zweiten Haltebereich (36);
e) Drehen der Wickelschablone (26) um 180° um die Drehachse unter Zufuhr des Drahtpakets (60) aus der Zufuhrrichtung (R), wobei die Fixierstelle aus dem ersten Haltebereich (34) in einen dritten Haltebereich (46) auf der dem ersten Haltebereich (34) gegenüberliegenden Seite der Wickelschablone (26) und die Fixierstelle aus dem zweiten Haltebereich (36) in den ersten Haltebereich (34) verlagert wird, wodurch sich für das Drahtpaket (60) unter Ausbildung eines Biegebereichs ein um die Wickelschablone (26) reichender Wickelkopf (42) ausbildet;
f) Fixieren des nachträglich zugeführten Drahtpakets (60) an der Fixierstelle in dem zweiten Haltebereich (36);
g) Wiederholen der Schritte d) bis f), wobei die Haltewirkung an der Fixierstelle im dritten Haltebereich (46) vor oder nach der Wiederholung des Schritts f) gelöst wird und die Haltewirkung an der zweiten Fixierstelle vor der Wiederholung des Schritts e) gelöst wird;
h) Wiederholen der Schritte b) bis g), bis die Spulenwicklung (70) vollständig ist;
i) Durchtrennen des Drahtpakets (60) in einem Bereich des zweiten Haltebereiches (36);
j) Abstreifen der Spulenwicklung (70) von der Wickelschablone (26).

2. Verfahren nach Anspruch 1, wobei das Drahtpaket (60) zunächst dadurch hergestellt wird, dass die doppelte Länge der für die Spulenwicklung (70) benötigten Drähte (32) ermittelt wird und das Drahtpaket (60) durch Umbiegen der Drähte (32) auf der für die Herstellung der Spulenwickelung (70) benötigten Länge hergestellt wird, sodass die Drähte (32) an einem Ende des Drahtpakets (60) paarweise miteinander verbunden sind.

3. Verfahren nach einem der vorhergehenden Ansprüche, **dadurch gekennzeichnet, dass** das Drahtpaket (60) beginnend mit dem Ende, an dem die Drähte (32) paarweise miteinander verbunden sind, senkrecht zu der Wickelschablone (26) zugeführt wird.

4. Verfahren nach einem der vorhergehenden Ansprüche, **dadurch gekennzeichnet, dass** das Verschieben in dem Verfahrensschritt d) parallel zur Drehachse der Wickelschablone (26) um ein Wegstück erfolgt, dessen Länge ungefähr gleich der Hälfte des Abstands der äußersten Drähte des Drahtpakets (60) bezogen auf alle Drähte ist, wodurch ein in Bezug zur Drehachse der Wickelschablone (26) geneigter Drahtabschnitt (40) zwischen dem ersten und dem zweiten Haltebereich (34, 36) geformt wird.

5. Verfahren nach einem der vorgehenden Ansprüche, **dadurch gekennzeichnet, dass** die Wickelköpfe (42) in dem durch Schritt e) ausgebildeten Biegebereich nachgeformt werden.

6. Verfahren nach Anspruch 5, **dadurch gekennzeichnet, dass** zum endgültigen Formen der Wickelköpfe (42) nach dem Verfahrensschritt e) ein profiliertes Formwerkzeug (50) gegen die Wickelköpfe (42) gepresst wird.

7. Verfahren nach einem der vorhergehenden Ansprüche, **dadurch gekennzeichnet, dass** das Drahtpaket im Schritt b) mittels einer ersten Haltevorrichtung (18) auf der Wickelschablone (26) in dem ersten Haltebereich (34) und in Schritt c) mittels einer zweiten Haltevorrichtung (29) in dem zweiten Haltebereich (36) festgehalten wird.

8. Verfahren nach Anspruch 4, **dadurch gekennzeichnet, dass** der erste Haltebereich (34), der dritte Haltebereich (46) und der zweite Haltebereich (36) in Drehrichtung der Wickelschablone (26) in dieser Reihenfolge aufeinander folgen und jede Haltevorrichtung (28, 29, 33) mit einer Drehung nach Schritt e) von einem Haltebereich (34, 36, 46) zu einem in Drehrichtung nachfolgenden Haltebereich (34, 36, 46) überführt wird.

9. Verfahren nach einem der vorhergehenden Ansprüche, **dadurch gekennzeichnet, dass** das Durchtrennen des Drahtpakets (60) im Schritt i) in einer Drehstellung der Wickelschablone (26) erfolgt, in welcher das Ende des Drahtpakets (60) mit den paarweise miteinander verbundenen Drähten auf der Seite des zweiten Haltebereichs (36) liegt.

10. Verfahren nach einem der vorhergehenden Ansprüche, **dadurch gekennzeichnet, dass** die paarweise verbundenen Drähte (32) im Laufe des Verfahrens bei der Zufuhr vor dem Erreichen des zweiten Haltebereiches (36) einmal oder mehrmals paarweise mit anderen paarweise verbundenen Drähten (32) vertauscht werden.

11. Verfahren nach einem der Ansprüche 1 bis 9, **dadurch gekennzeichnet, dass** das Drahtpaket vor der Durchführung des Verfahrensschritts a) abgelängt ist und die Zufuhr des für die Spulenwicklung (70) zum Einsatz kommenden Drahtpakets (60) in Schritt a) mit den an einem Ende des Drahtpakets (60) paarweise nicht miteinander verbundenen Drähten (32) in einer Zufuhrrichtung (R) senkrecht zu der Wickelschablone (26) erfolgt und, dass Schritt i) entfällt.

12. Stator (80) oder Rotor einer elektrischen Maschine aufweisend radial offenen Nuten (82), **dadurch gekennzeichnet, dass** eine nach einem der Ansprüche 1 bis 11 hergestellte Spulenwicklung (70) derart in die Nuten (82) eingesetzt ist, dass in einer ersten Nut (82a) von zwei aufeinanderfolgenden Nuten (82a, 82b) eine erste Hälfte von zwischen zwei Wickelköpfen (42) angeordneten Drähten (32) der Spulenwicklung (70) eingesetzt ist und in einer zweiten (82b) von zwei aufeinanderfolgenden Nuten (82a, 82b) eine zweite Hälfte von zwischen zwei Wickelköpfen (42) angeordneten Drähten (32) der Spulenwicklung (70) eingesetzt ist, **dadurch gekennzeichnet, dass** das Ende der Spulenwicklung (70) mit den paarweise miteinander verbundenen Drähten (32) und das Ende der Spulenwicklung (70) mit dem durchtrennten Drahtpaket (60) auf derselben Seite des Stators (80) oder des Rotors liegen.

## Claims

1. Method for producing a coil winding (70) for insertion into radially open slots (82) in a rotor or stator (80) of an electrical machine, wherein the coil winding (70) has a wire pack (60) consisting of a number of wires (32), wherein the wires (32) of the wire pack (60) run parallel to one another and are connected to one another in pairs at one end of the wire pack (60), and the wires, which are connected to one another in pairs, are formed in one piece from a continuous single wire (32a, 32b, 32c, 32d, 32e, 32f) and are bent at one end of the wire pack (60) in such a way that the form of the bends of all the continuous individual wires (32a, 32b, 32c, 32d, 32e, 32f) corresponds to the form of a winding head (42), wherein the coil winding (70) is formed by a flat winding former (26) which can be rotated about an axis of rotation, comprising the method steps:
a) feeding the wire pack (60) used for the coil winding (70) perpendicular to the winding former (26);
b) holding the wire pack (60) at a fixing point in a first holding region (34) on the winding former (26);
c) holding the wire pack (60) at a fixing point in a second holding region (36) at a distance in front of the winding former (26) with respect to the feed direction (R);
d) displacing the first holding region (34) relative to the second holding region (36) in a direction parallel to the axis of rotation of the winding former (26) to form a wire portion (40) inclined with respect to the feed direction (R) between the first holding region (34) and the second holding region (36);
e) rotating the winding former (26) by 180° about the axis of rotation while feeding the wire pack (60) from the feed direction (R), wherein the fixing point is displaced from the first holding region (34) into a third holding region (46) on the side of the winding former (26) opposite the first holding region (34), and the fixing point is displaced from the second holding region (36) into the first holding region (34), whereby a winding head (42) extending around the winding former (26) is formed for the wire pack (60) with the formation of a bending region;
f) fixing the subsequently fed wire pack (60) at the fixing point in the second holding region (36);
g) repeating steps d) to f), wherein the holding effect at the fixing point in the third holding region (46) is released before or after the repetition of step f), and the holding effect at the second fixing point is released before the repetition of step e);
h) repeating steps b) to g) until the coil winding (70) is complete;
i) severing the wire pack (60) in a region of the second holding region (36);
j) stripping the coil winding (70) from the winding former (26).

2. Method according to claim 1, wherein the wire pack (60) is produced first in that twice the length of the wires (32) required for the coil winding (70) is determined, and the wire pack (60) is produced by bending over the wires (32) to the length required for the production of the coil winding (70), so that the wires (32) are connected to one another in pairs at one end of the wire pack (60).

3. Method according to any one of the preceding claims, **characterized in that** the wire pack (60), beginning with the end at which the wires (32) are connected to one another in pairs, is fed perpendicular to the winding former (26).

4. Method according to any one of the preceding claims, **characterized in that** the displacement in method step d) takes place parallel to the axis of rotation of the winding former (26) by a section, the length of the section is approximately equal to half the distance between the outermost wires of the wire pack (60) in relation to all wires, whereby a wire portion (40) inclined with respect to the axis of rotation of the winding former (26) is formed between the first and the second holding region (34, 36).

5. Method according to any one of the preceding claims, **characterized in that** the winding heads (42) are reshaped in the bending region formed in step e).

6. Method according to claim 5, **characterized in that** for the final shaping of the winding heads (42) after method step e), a profiled shaping tool (50) is pressed against the winding heads (42).

7. Method according to any one of the preceding claims, **characterized in that** the wire pack is held in step b) by means of a first holding device (18) on the winding former (26) in the first holding region (34), and in step c) by means of a second holding device (29) in the second holding region (36).

8. Method according to claim 4, **characterized in that** the first holding region (34), the third holding region (46), and the second holding region (36) follow one another in this order in the direction of rotation of the winding former (26), and each holding device (28, 29, 33) is transferred with a rotation according to step e) from a holding region (34, 36, 46) to a subsequent holding region (34, 36, 46) in the direction of rotation.

9. Method according to any one of the preceding claims, **characterized in that** the severing of the wire pack (60) in step i) takes place in a rotary position of the winding former (26), in which rotary position the end of the wire pack (60) with the wires connected to one another in pairs lies on the side of the second holding region (36).

10. Method according to any one of the preceding claims, **characterized in that** the wires (32) connected in pairs are exchanged once or multiple times in pairs with other wires (32) connected in pairs in the course of the method during the feed before reaching the second holding region (36).

11. Method according to any one of claims 1 to 9, **characterized in that** the wire pack is cut to length before the implementation of method step a), and the feed of the wire pack (60) used for the coil winding (70) in step a) with the wires (32) not connected to one another in pairs at one end of the wire pack (60) takes place in a feed direction (R) perpendicular to the winding former (26), and **in that** step i) is omitted.

12. Stator (80) or rotor of an electrical machine having radially open slots (82), **characterized in that** a coil winding (70) according to any one of claims 1 to 11 is inserted into the slots (82) in such a way that a first half of wires (32) of the coil winding (70) arranged between two winding heads (42) is inserted into a first slot (82a) of two successive slots (82a, 82b), and a second half of wires (32) of the coil winding (70) arranged between two winding heads (42) is inserted into a second slot (82b) of two successive slots (82a, 82b), **characterized in that** the end of the coil winding (70) with the wires (32) connected to one another in pairs and the end of the coil winding (70) with the severed wire pack (60) lie on the same side of the stator (80) or the rotor.

## Revendications

1. Procédé de fabrication d'un enroulement de bobine (70) destiné à être inséré dans des rainures (82) ouvertes radialement dans un rotor ou stator (80) d'une machine électrique, dans lequel l'enroulement de bobine (70) présente un ensemble de fils (60) qui se compose d'un nombre de fils (32), dans lequel les fils (32) de l'ensemble de fils (60) s'étendent parallèlement les uns aux autres et sont reliés entre eux par paires à une extrémité de l'ensemble de fils (60), et les fils reliés entre eux respectivement par paires sont formés d'un seul tenant à partir d'un fil individuel (32a,32b,32c,32d,32e,32f) respectivement continu et sont repliés à une extrémité de l'ensemble de fils (60) de telle manière que la forme des replis de tous les fils individuels (32a,32b,32c,32d,32e,32f) continus correspond à la forme d'une tête d'enroulement (42), dans lequel l'enroulement de bobine (70) est en outre formé par un gabarit d'enroulement (26) plat et rotatif autour d'un axe de rotation, présentant les étapes de procédé suivantes :
a) l'amenée de l'ensemble de fils (60) utilisé pour l'enroulement de bobine (70) perpendiculairement au gabarit d'enroulement (26) ;
b) le maintien de l'ensemble de fils (60) en un point de fixation dans une première zone de retenue (34) sur le gabarit d'enroulement (26) ;
c) le maintien de l'ensemble de fils (60) en un point de fixation dans une deuxième zone de retenue (36) à une distance devant le gabarit d'enroulement (26) par rapport au sens d'amenée (R) ;
d) le déplacement de la première zone de retenue (34) par rapport à la deuxième zone de retenue (36) dans un sens parallèle à l'axe de rotation du gabarit d'enroulement (26) pour la formation d'une section de fil (40) inclinée par rapport au sens d'amenée (R) entre la première zone de retenue (34) et la deuxième zone de retenue (36) ;
e) la rotation du gabarit d'enroulement (26) de 180° autour de l'axe de rotation par l'amenée de l'ensemble de fils (60) depuis le sens d'amenée (R), dans lequel le point de fixation est déplacé de la première zone de retenue (34) dans une troisième zone de retenue (46) sur le côté du gabarit d'enroulement (26) opposé à la première zone de retenue (34), et le point de fixation est déplacé de la deuxième zone de retenue (36) dans la première zone de retenue (34), selon lequel une tête d'enroulement (42) parvenant autour du gabarit d'enroulement (26) se forme pour l'ensemble de fils (60) en réalisant une zone de flexion ;
f) la fixation de l'ensemble de fils (60) amené ultérieurement au point de fixation dans la deuxième zone de retenue (36) ;
g) la répétition des étapes d) à f), dans lequel l'action de retenue au point de fixation dans la troisième étape de retenue (46) est libérée avant ou après la répétition de l'étape f)
et l'action de retenue au second point de fixation est libérée avant la répétition de l'étape e) ;
h) la répétition des étapes b) à g) jusqu'à ce que l'enroulement de la bobine (70) soit complet ;
i) la séparation de l'ensemble de fils (60) dans une zone de la deuxième zone de retenue (36) ;
j) l'enlèvement de l'enroulement de bobine (70) du gabarit d'enroulement (26).

2. Procédé selon la revendication 1, dans lequel l'ensemble de fils (60) est tout d'abord fabriqué par le fait que la longueur doublée des fils (32) nécessaires à l'enroulement de bobine (70) est déterminée, et l'ensemble de fils (60) est fabriqué par repli des fils (32) sur la longueur nécessaire à la fabrication de l'enroulement de bobine (70) de sorte que les fils (32) soient reliés entre eux par paires à une extrémité de l'ensemble de fils (60).

3. Procédé selon l'une quelconque des revendications précédentes, **caractérisé en ce que** l'ensemble de fils (60) est amené, en commençant par l'extrémité à laquelle les fils (32) sont reliés entre eux par paires, perpendiculairement au gabarit d'enroulement (26).

4. Procédé selon l'une quelconque des revendications précédentes, **caractérisé en ce que** le déplacement dans l'étape de procédé d) est effectué parallèlement à l'axe de rotation du gabarit d'enroulement (26) selon un tronçon dont la longueur est à peu près égale à la moitié de la distance des fils les plus extérieurs de l'ensemble de fils (60) par rapport à tous les fils, selon lequel une section de fils (40) inclinée par rapport à l'axe de rotation du gabarit d'enroulement (26) est formée entre la première et la deuxième zone de retenue (34, 36).

5. Procédé selon l'une quelconque des revendications précédentes, **caractérisé en ce que** les têtes d'enroulement (42) sont reformées dans la zone de flexion formée par l'étape e).

6. Procédé selon la revendication 5, **caractérisé en ce qu'**un outil de formage (50) profilé est pressé contre les têtes d'enroulement (42) pour le formage final des têtes d'enroulement (42) après l'étape de procédé e).

7. Procédé selon l'une quelconque des revendications précédentes, **caractérisé en ce que** l'ensemble de fils dans l'étape b) est maintenu sur le gabarit d'enroulement (26) dans la première zone de retenue (34) au moyen d'un premier dispositif de retenue (18) et dans l'étape c) dans la deuxième zone de retenue (36) au moyen d'un deuxième dispositif de retenue (29).

8. Procédé selon la revendication 4, **caractérisé en ce que** la première zone de retenue (34), la troisième zone de retenue (46) et la deuxième zone de retenue (36) se suivent dans cet ordre dans le sens de rotation du gabarit d'enroulement (26), et chaque dispositif de retenue (28, 29, 33) est transféré avec une rotation après l'étape e) d'une zone de retenue (34, 36, 46) à une zone de retenue (34, 36, 46) suivante dans le sens de rotation.

9. Procédé selon l'une quelconque des revendications précédentes, **caractérisé en ce que** la séparation de l'ensemble de fils (60) dans l'étape i) est effectuée dans une position de rotation du gabarit d'enroulement (26), dans laquelle l'extrémité de l'ensemble de fils (60) avec les fils reliés entre eux par paires se trouve sur le côté de la deuxième zone de retenue (36).

10. Procédé selon l'une quelconque des revendications précédentes, **caractérisé en ce que** les fils (32) reliés par paires sont échangés une fois ou plusieurs fois par paires avec d'autres fils (32) reliés par paires au cours du procédé lors de l'amenée avant d'atteindre la deuxième zone de retenue (36).

11. Procédé selon l'une quelconque des revendications 1 à 9, **caractérisé en ce que** l'ensemble de fils est coupé à longueur avant l'exécution de l'étape de procédé a), et l'amenée de l'ensemble de fils (60) utilisé pour l'enroulement de bobine (70) dans l'étape a) est effectuée avec les fils (32) non reliés entre eux par paires à une extrémité de l'ensemble de fils (60) dans un sens d'amenée (R) perpendiculaire au gabarit d'enroulement (26), et **en ce que** l'étape i) est supprimée.

12. Stator (80) ou rotor d'une machine électrique présentant des rainures (82) ouvertes radialement, **caractérisé en ce qu'**un enroulement de bobine (70) fabriqué selon l'une quelconque des revendications 1 à 11 est inséré dans les rainures (82) de telle manière qu'une première moitié de fils (32) agencés entre deux têtes d'enroulement (42) de l'enroulement de bobine (70) est insérée dans une première rainure (82a) de deux rainures (82a, 82b) se suivant et une seconde moitié de fils (32) agencés entre deux têtes d'enroulement (42) de l'enroulement de bobine (70) est insérée dans une seconde (82b) de deux rainures (82a, 82b) se suivant, **caractérisé en ce que** l'extrémité de l'enroulement de bobine (70) avec les fils (32) reliés entre eux par paires et l'extrémité de l'enroulement de bobine (70) avec l'ensemble de fils (60) séparés se trouvent sur le même côté du stator (80) ou du rotor.
